# EUROPEAN PATENT APPLICATION

(11) **EP 3 703 265 A1**
(43) Date of publication of application: **02.09.2020**
(21) Application number: 20155232.0
(22) Date of filing: 03.02.2020
(51) Int. Cl.: H04B 1/3827, H04L 29/06, H04W 4/08, H04W 4/10, H04W 12/06, H04W 76/45, H04B 5/06, A42B 3/30, H04B 1/64

(54) **WEARABLE COMMUNICATION INTERFACE UNIT FUNCTIONING IN A DUAL OPERATING MODE, WEARABLE SYSTEM INCLUDING THE INTERFACE UNIT, AND COMMUNICATION NETWORK**

(30) Priority: 28.02.2019 IT 201900002947
(71) Applicant: Larimart S.p.A., 00168 Roma (IT)
(72) Inventor: PETRUCCI, Alessio, 00055 LADISPOLI (RM) (IT); CIALLELLA, Crescentino, 00135 ROMA (IT)
(74) Representative: Bertolotto, Simone

(57) **Abstract**

An interface unit (20) wearable by an operator, configured, in a first operating mode, to control the communication through a radio (50) connected thereto and, in a second operating mode, to control the radio communication through an interphone module (60). In the first operating mode, the radio establishes a traditional communication while, in the second operating mode, it establishes a half-duplex interphone communication. Operators belonging to an operating team, for example a military one, can talk with each other by exploiting a walkie-talkie or interphone type of communication in a secure, private and encrypted manner without interfering with the traditional methods of communication.

## Description

### CROSS-REFERENCE TO RELATED APPLICATIONS

This patent application claims priority from Italian patent application no. 102019000002947 filed on 28/02/2019.

### TECHNICAL FIELD

The present invention relates to an interface unit wearable by an operator and configured to form a communication interface with a radio, a wearable communication system comprising the interface unit and a communication network formed by a plurality of wearable communication systems.

### BACKGROUND ART

During the work, a specialized operator (such as, for example, a soldier on mission, a police operator, a firemen, a security guard, etc.) needs efficient and reliable equipment for communication with other operators and/or with a control centre for operation coordination.

Communication systems are known that allow an operator to use voice transmissions for orders and information. These communication systems enable the operator to interface with his/her team to coordinate efforts and actions, in order to move efficiently in the operating environment.

In a prior Italian utility model no. TO2014U000099, in the applicant's name, a wearable communication system is disclosed that includes a radio, a headset, a device that can be coupled to the chest of the operator (hereinafter, also referred to as "chest-worn device", for simplicity) and, optionally, a wireless transmitter. In particular, the chest-worn device is used for routing the audio signals between the various radio channels made available by the radio. The wireless transmitter has equivalent functionality to the chest-worn device, but has reduced size and weight and can be placed in positions that are easier for the operator to reach (for example, on the body of a rifle), enabling the operator to select the audio channel through which to communicate without having to interrupt his/her action (for example, without taking the hand away from the rifle).

However, the wearable communication systems currently on the market do not allow the operator to securely manage communications because they lack communication protection systems. Furthermore, there are no wearable communication systems that allow an efficient communication between members of the same team (where only these members can participate in the exchange of information in a secure manner), and that, at the same time, provide the possibility to communicate with other selected teams (friendly teams) operating in the same area.

### DISCLOSURE OF INVENTION

The object of the present invention is to provide an interface unit wearable by an operator and configured to form a communication interface with a radio, a wearable communication system comprising the interface unit and a communication network formed by a plurality of wearable communication systems, with the objective of expanding the functionality of known types of wearable communication interface unit, specifically in strategic and tactical operations.

According to the present invention, an interface unit wearable by an operator, a wearable communication system comprising the interface unit and a communication network are provided, as defined in the appended claims.

### BRIEF DESCRIPTION OF THE DRAWINGS

For a better understanding of the present invention, a preferred embodiment thereof is now described, purely by way of non-limitative example and with reference to the accompanying drawings, in which:
- Figure 1 shows a chest-worn device, a radio, a headset and a wireless transmitter, configured to form a wearable communication system in one operating mode;
- Figures 2A-2C show respective views of the chest-worn device of Figure 1;
- Figure 3 shows a diagram of the operating state of an interphone system integrated in the chest-worn device of Figure 1; and
- Figures 4A and 4B show a block diagram of a transmission system and a receiving system, respectively, of the interphone system of the chest-worn device of Figure 1.

### BEST MODE FOR CARRYING OUT THE INVENTION

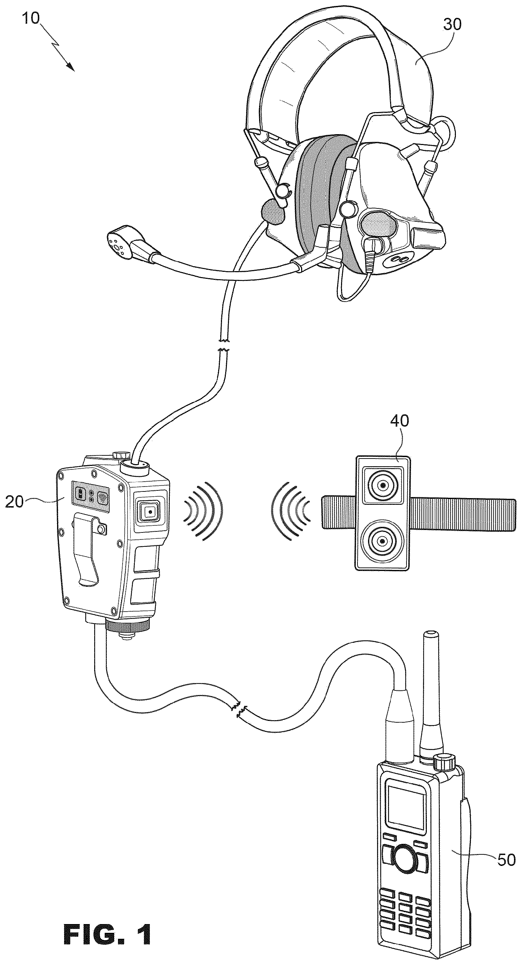

With reference to Figure 1, the present invention specifically relates to an interface unit 20 (in detail, a device that can be coupled to the chest of an operator, or "chest-worn device") with improved communication functionality and able to operate autonomously, and to a wearable communication system 10 including the interface unit 20.

Figure 1 shows the wearable communication system 10, which includes a headset 30, the chest-worn device 20, a radio 50 and, optionally, a wireless transmitter 40 (also called Dual Channel Wireless).

The headset 30 (for example, of the "Peltor" type, comprising earphones with 150Ω or 75Ω impedance) is a known acoustic protection against harmful noise, and is designed to be worn comfortably under a helmet. The chest-worn device 20 is also provided with an audio/PTT (Push to Talk) connector for the connection with the radio 50 (of type H-149 SDR or SRD-HH, also known and not described in detail).

The chest-worn device 20 is also a communication interface system between the headset 30 and the radio 50. According to one aspect of the present invention, the chest-worn device 20 is a system configured to be fixed, by an opportune mounting clip 9, to the clothes of an operator, who wears it on the front part of their torso (i.e. on the chest). It is obvious that the chest-worn device 20 could also be worn on the abdomen or the shoulder of the operator.

When operated, the chest-worn device 20 enables the operator to select which radio channel he/she intends to use for communication. The chest-worn device 20 enables selecting an Intra-Team-Intercom radio channel (also referred to as a PTT-ITI radio channel). The PTT-ITI radio channel (or "internal network") is used by the operator to exchange communications with other members of the team to which they belong, and therefore enables confidential communications with only the members of said operating team.

The chest-worn device 20 also has an integrated wireless device, which is configured to be wirelessly connected to the wireless transmitter 40 (the latter of known type and PTT). This allows the wireless transmitter 40 to operate in conjunction with the chest-worn device 20, so as to enable the operator to control which radio channel is used to route the radio signal, by means of opportune buttons of the wireless transmitter 40 (not shown in the figures). In this way, it is therefore not necessary to resort to the chest-worn device 20 to select the radio channel. More specifically, the wireless transmitter 40 allows selecting a plurality of radio channels via a respective plurality of buttons. In the present invention, the operator is able to select two radio channels (referred to as "network 1" and "network 2") through the wireless transmitter 40.

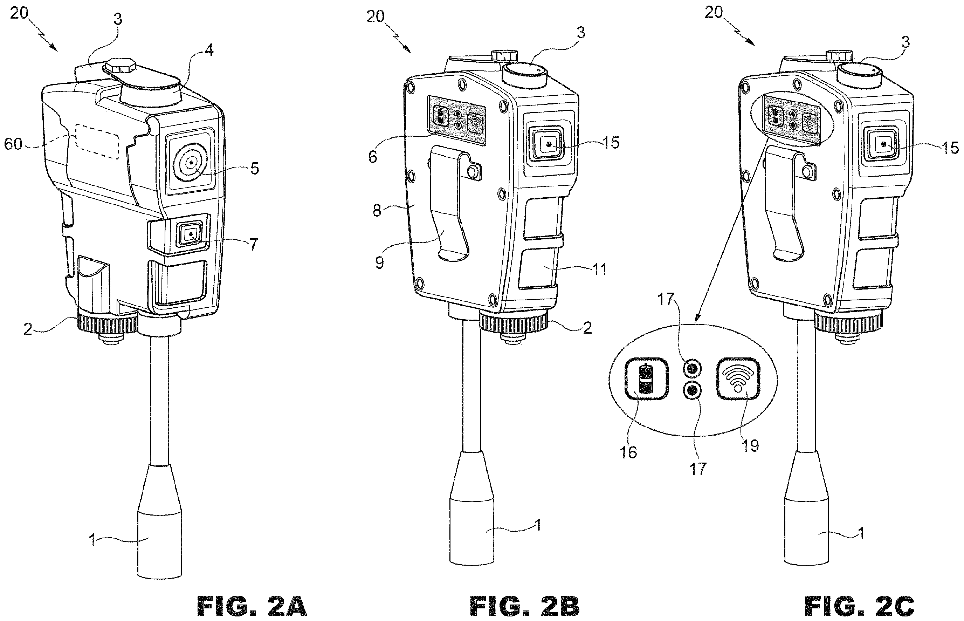

Different views of the chest-worn device 20 are shown Figures 2A-2C.

The chest-worn device 20 is composed of the following items (shown in Figures 2A-2C, using the reference numerals indicated below for each item):
1 Connector (for example, "ODU" type) for the radio 50
2 Battery cover
3 Volume potentiometer for listening through headset 30
4 Jack protection cap for connection to headset 30
5 Round button - PTT2 for transmitting on "network 2"
6 Control buttons/LEDs (including a Battery Button 16, a green LED 17, a yellow LED 18 and a Pairing Button 19)
7 Square button - PTT1 for transmitting on "network 1"
8 Cover
9 Mounting clip
11 Frame
15 ITI button - PTT-ITI for transmitting on the "internal network"

A further PWR button - a button for switching on/off the chest-worn device 20 and not shown in the Figures - may be provided, in a manner in itself evident to a person skilled in the art. In one possible embodiment, this PWR button is not present and the chest-worn device 20 automatically switches on when connected to a radio 50 that is already on.

The chest-worn device 20 also includes a battery (not shown in Figure 2 because it is positioned in a suitable compartment inside the frame 11) for powering the chest-worn device 20. This battery is located at the battery cover 2, together with a USB connector (for example, a micro-USB connector) for recharging the battery. According to one aspect of the present invention, the battery is rechargeable, for example of the "LiPo" type (3.7V nominal, with a capacity of 2000mA/h). To charge the battery, it is sufficient to connect the micro-USB connector to a power source, such as a power socket or USB-Power-Bank.

According to a different embodiment, not shown in the figures, the battery is of the built-in type and not replaceable. In this case, the battery cover 2 is not present.

The elements shown in Figures 2A-2C, except for the PTT-ITI button 15, are known from the prior Italian utility model TO2014U000099 and are not described in detail herein.

Instead, the operating characteristics of the chest-worn device 20 are the following:
- Two PTT buttons (PTT1 7 and PTT2 5) that enable selecting two radio channels (network 1 and network 2, respectively) of the radio 50.
- An ITI button (PTT-ITI 15) that enables selecting the radio channel of the internal network.
- Volume adjustment of the headset 30 via the volume potentiometer 3.
- Wireless connection to the wireless transmitter 40.
- "NATO" type jack for connection of the headset 30.
- Connector for connection of the radio 50.

It is therefore evident that the operator can communicate both over the internal network by pressing the PTT-ITI button 15 of the chest-worn device 20, and over network 1 or network 2 of the radio 50 by pressing the PTT1 button 7 or the PTT2 button 5, respectively, of the chest-worn device 20 (alternatively, by pressing the respective buttons of the wireless transmitter 40). The respective pressing of the PTT1 button 7 or the PTT2 button 5 generates the sending of a respective command signal, by the chest-worn device 20, to control the radio 50. These command signals are generated, in a manner which is in itself known, by a radio connection module that implements a digital interface and is installed in the chest-worn device 20 and configured for this purpose.

Consequently, members of the same operating team can securely communicate with each other on the internal network for communications with nearby teams, or use the network 1 or 2 to communicate with operators or services external to the team.

The communication mode that exploits the internal network is based on a data transmission mode known as half-duplex. According to this mode (implemented, for example, on common walkie-talkie devices), the operator (here, one of the members of the team) who intends to communicate with the other members of the team presses the dedicated button (PTT-ITI 15) of the device and communicates with his/her team. It is therefore not possible for more members of the team to communicate simultaneously, as the radio channel is occupied by the communication of the operator and the remaining members of the team are listening.

The chest-worn device 20 has additional functionality that distinguishes it from similar devices, including:
- Communications security (also known as a digital scrambler): only the members of a team can receive communications within the team in an intelligible manner.
- Blocking the transmission of one member, if another member of the team has already engaged the channel.
- Possibility for a privileged user (such as a team leader) to send an emergency signal to all the members of the team to request freeing the channel, even if a communication is already active on the internal network.
- Communication capability also in compartmentalised environments.

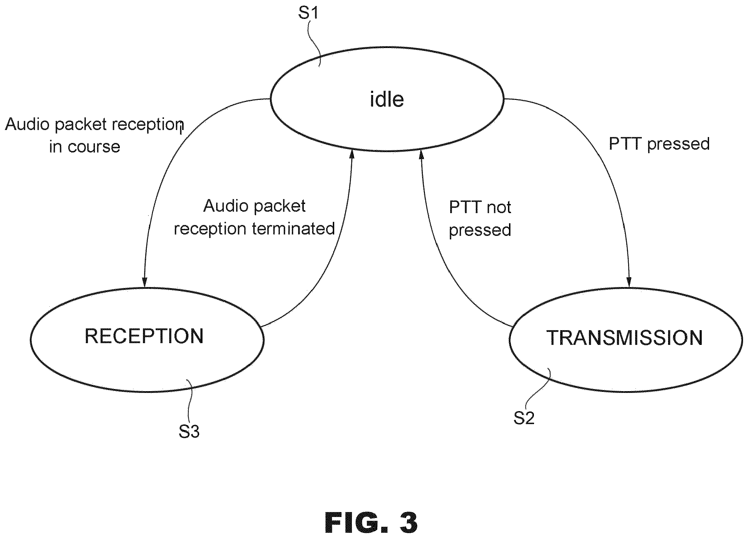

The functioning of data transmission performed over the internal network by the chest-worn device 20 is schematically shown in Figure 3.

With reference to Figure 3, the chest-worn device 20 is normally in an "idle" state S1, which represents the chest-worn device 20 in a state of rest. In this state, the chest-worn device 20 is on but is not being used for exchanging radio communications over the internal network. If the operator presses the PTT-ITI button 15, the chest-worn device 20 passes to a transmission state S2, and then returns to the idle state S1 when the PTT-ITI button 15 is released. From the idle state S1 it is also possible to pass to a receiving state S3, in which the chest-worn device 20 receives an opportune series of data packets (also known as audio-frames) over the internal network, and then returns to the idle state S1 when this communication terminates.

More specifically, in the transmission state S2, an audio signal coming from at least one microphone connected to the headset 30 is acquired, and this audio sample is transmitted over the internal network in the form of digital packets of opportune type, length and content (data vectors).

The passage from the idle state S1 to the receiving state S3 takes place at the moment the chest-worn device 20 receives one of said digital packets. To keep the receiving state S3 active, the chest-worn device 20 must continue to receive digital packets. In particular, each of these digital packets must be received by the chest-worn device 20 within a predetermined time period ("reception-timeout", or "PTT timeout", for example 100ms) from the last digital packet received, otherwise the chest-worn device 20 returns to the idle state S1. In other words, the steps of leaving the idle state S1 and entering the receiving state S3 are constrained to the reception of a first data packet that is considered to be valid; remaining in the receiving state S3 is, in turn, constrained to the reception of successive data packets, each of them being received within the above-mentioned predetermined time period, counted by a timer. In one embodiment, the reception of each successive data packet causes the zeroing of the timer. The end of the reception corresponds to the timer reaching a predetermined maximum threshold value.

The communication associated with the internal network of the chest-worn device 20, as shown in Figure 3, is of the half-duplex type in a 2.4Ghz radio band and is managed by an interphone system 60 integrated in the chest-worn device 20 (more specifically, in an opportune compartment located inside the frame 11). The interphone system 60 is indicated in Figure 2A by a broken-lined area, as it is inside the frame 11.

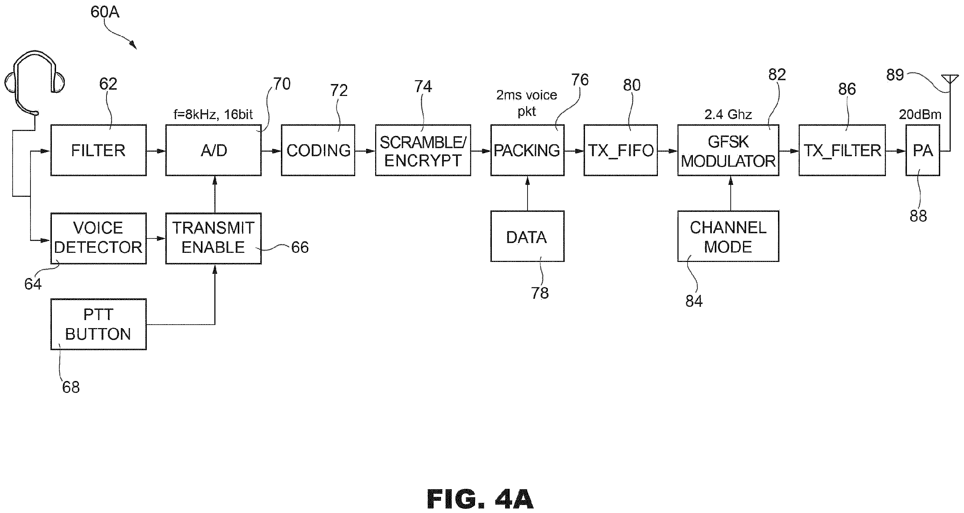

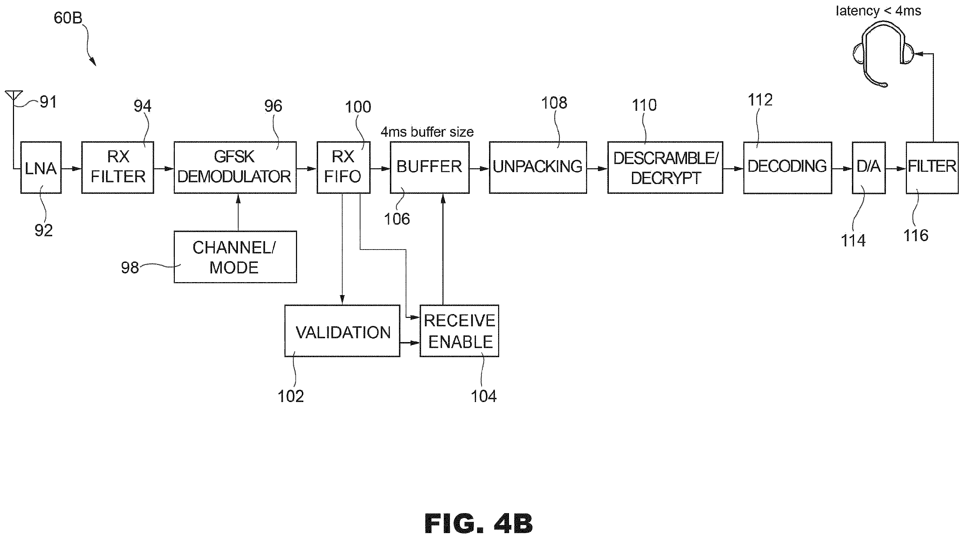

To this end, the interphone system 60 comprises a transmission circuit section 60A (Figure 4A) and a receiving circuit section 60B (Figure 4B), used during the transmission state S2 and during the receiving state S3, respectively.

The chest-worn device 20 also comprises a microprocessor (not shown and located in an opportune compartment inside the frame 11) for controlling the various components of the interphone system 60, sending command signals to the radio 50, managing the chest-worn device 20 and for implementing the software functions described below.

With reference to Figure 4A, the transmission circuit section 60A is schematically shown, which operates on the internal network. The purpose of this transmission circuit section 60A is to sample an audio signal coming from the operator's microphone, thus generating audio samples, acquire the audio samples generated during the sampling and to transmit them over the internal network.

In particular, the transmission circuit section 60A includes:
- a filter block 62: this is a hardware filter, connected to the microphone of the headset 30 to receive the audio signal (the voice of the operator wearing the wearable communication system 10), and is designed to analogically amplify and filter this audio signal, thus generate an amplified and filtered audio signal as output.
- a voice-detector block 64: connected to the filter 62 to receive in input the amplified and filtered audio signal, the voice-detector block 64 implements a voice recognition algorithm in order to produce, as output, a first state signal consistent with the voice and useful for the activation of the subsequent modules.
- a transmit-enable block 66: a logic circuit, connected to the voice-detector block 64 to receive in input from the latter the first state signal, and which generates, as output, a first active signal with respect to a predetermined value of the first state signal and the simultaneous pressing of the PTT-ITI button 15 (represented by a PTT block 68, connected to the transmit-enable block 66).
- an A/D block 70: an analogue to digital conversion circuit, connected to the filter 62 and the transmit-enable block 66 to receive in input from these the amplified and filtered audio signal and the first active signal, respectively; it is adapted to generate, as output, digital samples obtained from discretization of the amplified and filtered audio signal.
- a coding block 72: a software module and connected to the A/D block 70 to receive in input the digital samples, and configured to process these digital samples and to perform an associated operation of numeric compression, via techniques in themselves known; the compressed digital samples produced as output contain the same information as the digital samples in input, but occupy less space (in bits).
- a scramble/encrypt block 74: a software module, connected to the coding block 72 to receive in input the compressed digital samples, and configured to perform a scrambling operation on the information contained in the compressed digital samples according to a recognition key known to the transmitter and the receiver (i.e. generates encrypted digital samples as output) . In particular, the data to be encrypted is converted to other data, having the same length, by using table-driven conversion: the data to be encrypted is treated as an entry index of the table and the associated contents of this indexed entry is selected as the data to be transmitted. The table is known to both the transmitter (for generation of the encrypted data) and the receiver (for conversion of the encrypted data into the original data). It is evident that the receiver has a dual table with respect to that in transmitter.
- a packing/data block 76: a software module, connected to the scramble/encrypt block 74 to receive in input the encrypted digital samples, and configured to accumulate a plurality of successive encrypted digital samples (for example, 16 successive samples) and generate, as output, a table (an audio-frame, represented by a data block 78 connected to the packing/data block 76) with the addition of the transmission channel, ready to be transmitted. The number of the transmission channel is appended (as the last data item) to the audio-frame packet.
- a TX-FIFO block 80: a software module, connected to the packing/data block 76, and configured to receive in input said table, the payload of which includes a plurality of rows of data (for example, 17 rows), and to encapsulate the table inside a data vector associated with a communication protocol standard and produced as output by this block. Therefore, in this specific example, the 17-th data item identifies the channel on which it is transmitted.
- a GFSK-modulator/channel-mode block 82: a software module, connected to the TX-FIFO block 80 to receive in input the data vector, and configured to modulate this data vector, for example by means of a Gaussian-FSK modulation, to convert each bit of each received data vector into analogue form, and then perform a modulation (for example, by means of FSK modulation) dependent on the value of each bit to be transmitted (i.e. high/low value) and the radio channel (shown by a channel-mode block 84, connected to the GFSK-modulator/channel-mode block 82), in order to generate a processed data vector as output.
- a TX-filter block 86: a circuit connected to the GFSK-modulator/channel-mode block 82 to receive in input the processed data vector, and configured to add a radio carrier based on the radio transmission channel and for consequent band filtering of the modulated signal (for example, at 2.4GHz), in order to generate a radio signal as output.
- a "PA" block 88: a power amplifier, connected to the TX-filter block 86 to receive in input the radio signal, and to amplify it before transmitting it via a transmission antenna 89 coupled thereto.

With reference instead to Figure 4B, the receiving circuit section 60B is schematically shown. The reception takes place via a receiving antenna 91, which receives audio samples on the internal network. The receiving and the associated decoding of the audio packets is activated when two conditions are verified. The first condition is that a frame compatible with the communication protocol standard of the internal network is recognized in the sequence of audio packets during the normal process of receiving and decoding of the received radio signals. The second condition is that the data channel contained inside the read audio packet corresponds to the internal network made available by the chest-worn device 20. If both of these conditions are simultaneously verified, the chest-worn device 20 passes to the receiving state S3 on the internal network, and remains in this state until the reception of data terminates.

In particular, the receiving circuit section 60B includes:
- an "LNA" block 92: a low-noise amplifier that can operate in the band of the signal provided in input by the antenna 91 (coupled to the LNA block 92 and compatible with the band of the transmitted signal, and therefore, equal to 2.4GHz here) to generate an amplified signal as output.
- an RX-filter block 94: a receiving filter, connected to the LNA block 92 to receive in input the amplified signal and configured to filter it in the band selected according to the chosen radio channel, generating a filtered amplified signal as output.

- a GFSK-demodulator/channel-mode block 96: a circuit connected to the RX-filter block 94 to receive in input the filtered amplified signal and configured to demodulate it and extract the individual bits based on the chosen demodulation (for example Gaussian-FSK, compatible with the modulation applied by the GFSK-modulator/channel-mode block 82) and on the configured radio channel (shown in the figure by a further channel-mode block 98, connected to the GFSK-demodulator/channel-mode block 96 and compatible with the channel-mode block 84), generating a demodulated signal as output.
- an RX-FIFO block 100: a software module, connected to the GFSK-demodulator/channel-mode block 96 to receive in input the demodulated signal and to generate, as output, a respective data vector, similar to that implemented by the TX-FIFO block 80.
- a validation block 102: a software module, connected to the RX-FIFO block 100 to receive in input the data vector generated by the latter and configured to analyse it and check that it matches the same communication protocol standard of the internal network used in the TX-FIFO block 80. In the case of an effective match, the validation block 102 generates, as output, a second state signal (similar to the first state signal) and the receiving process continues with the execution of the subsequent blocks, otherwise the received data is rejected.
- a receive-enable block 104: connected to the validation block 102 and to the RX-FIFO block 100 to receive in input the second state signal and the data vector generated by the RX-FIFO block 100, respectively; it is configured to carry out analysis of the data contained in this data vector and to check that the radio channel information included in the data vector is the same as that of the internal network; if affirmative, and if the state signal has an established value (for example, high/low), the receiving process continues with the generation of an active signal as output and with the execution of the subsequent blocks, otherwise the received data is rejected.
- a buffer block 106: a software module, connected to the receive-enable block 104 and to the RX-FIFO block 100 to receive the second active signal and the data vector, respectively; it is configured to extract the payload from the received data vector and to insert the payload in an opportunely sized data buffer (output of buffer block 106).
- an unpacking block 108: a software module, connected to the buffer block 106 to receive in input the data buffer; it is configured to extract compressed audio samples from the data buffer and decompress these compressed audio samples, generating respective decompressed samples (compatible with the compression performed by the packing/data block 76), and send these decompressed samples as output, in a serial manner, to the subsequent blocks.
- descramble-decrypt/decoding blocks 110, 112: a software module, connected to the unpacking block 108 to receive in input the decompressed samples; it is configured to decrypt the information contained in the decompressed audio samples, according to a recognition key also known to the transmitter (with particular reference to the coding block 72), in order to generate, as output, an audio sample in digital format.
- a "D/A" block 114: a circuit connected to the descramble-decrypt/decoding blocks 110, 112 to receive the audio sample in digital format, and configured to convert this audio sample in digital format into a respective analogue sample (output of D/A block 114).
- a filter block 116: a circuit connected to the D/A block 114 to receive in input said analogue sample; it is configured to filter this analogue sample (or rather to adjust its amplitude to the relative audio band to generate a filtered analogue sample, for a consequent transmission of the latter to the earphones of the headset 30.

Summarizing, with regard to the audio transmission performed over the internal network by means of the chest-worn device 20, this takes place by sending data packets containing the audio samples of the audio signal received from the microphone. Each data packet contains a plurality of audio samples (for example, 16 audio samples) and ends with a datum that identifies the channel on which it is transmitted (i.e. the internal network). When the radio is in the transmission state S2 on the internal network, the audio signal (i.e. the voice of the operator wearing the wearable communication system 10) is first received by the microphone and then digitalized and compressed at time intervals, each having a first value (for example, 125ps), consequently generating a respective audio sample for each time interval. One or more data packets are then generated starting from said digitalized and compressed audio samples. In particular, each data packet includes a plurality of audio samples (for example, 16 audio samples); in addition, a final datum is added to the plurality of audio samples that is relative to the transmission channel (i.e. to the internal network), which is therefore an identifier of the radio channel to use for the transmission. These data packets are then transmitted over the internal network at time intervals each having a second value (for example, they are transmitted every 2ms). In particular, the ratio between said second value and said first value is equal to the number of audio samples that form each digital packet. The process is repeated as long as the chest-worn device remains in the transmission state S2.

The chest-worn device 20 is provided with a plurality of non-interfering radio communication channels, called "modes" (according to one aspect of the present invention, there are 16 modes present). The modes have a bandwidth separation of 8MHz, and enable the simultaneous communication of a corresponding plurality of operating teams in the same area, in security and without interference with one another. Each team uses a respective mode, different from those of the other teams, and this respective mode is, for that team, the previously described internal network.

The operators, who each wears a respective wearable communication system 10, therefore form a communication network. Each of these operators is thus equipped with a respective chest-worn device 20, which includes a respective radio connection module and a respective interphone system 20. Operatively, the operators are normally subdivided into one or more operating teams that operate in the same area. The radio connection modules are configured to allow the operators of a first operating team to communicate with other operating teams, or with operators or services external to the first operating team; the interphone systems 20 are instead configured to allow the operators of the first operating team to communicate with each other over the internal network, via encrypted interphone communication (or, more generally, allow each operator to communicate only with members of the team to which they belong).

When switched on, the chest-worn device 20 sets itself to the last mode selected when previously used. In this phase, it is possible to change mode by running through the choices via the PWR button 21 (with the function of incrementing the mode) or the PTT-ITI button 15 (with the function of decrementing the mode).

The last mode selected is instantaneously and permanently stored in a non-volatile memory of the chest-worn device 20 (positioned in an opportune compartment inside the frame 11).

The communication between different chest-worn devices 20 is only possible for chest-worn devices 20 in the same mode, and is of the "half-duplex" type (i.e. transmission and reception are mutually exclusive). Transmission over the internal network takes place by pressing the PTT-ITI button 15, and is only usable when there is no transmission in course by other members of the same team (i.e. only when this mode is free of transmissions). If a first member of the team presses the PTT-ITI button 15 while the mode is already occupied by the communication of a second member, the blocking of the transmission will be signalled with a sequence of error tones.

Instead, reception of the communication is always possible, on condition that the mode selected on the receiver corresponds to that of the transmitter.

There is no limit to the possible number of receivers enabled for reception, on condition that they are positioned within the radio range limit of the chest-worn devices (also known as "range distance" and, for example, equal to roughly 150m in the present invention) and that they possess the recognition key.

Furthermore, during normal radio operations, it is always possible to know the mode in which the device is configured, by briefly pressing (for approximately Is) and releasing the PWR button 21.

During normal radio operations, it is always possible to change the mode of the device to enable talking also with other devices set to other modes.

To change mode during normal radio operations, it is sufficient to keep one of the buttons PWR 21 and PTT-ITI 15 pressed and, at the same time, briefly press (for approximately Is) and then release the other of the buttons PTT-ITI 15 and PWR 21. This sequence causes passage of the device to the radio mode selection state and is signalled by the emission of a series of tones of increasing frequency in the headset. The return to normal radio operations takes place automatically after a time interval (equal to approximately 2s) of inactivity of the mode increment/decrement buttons. The mode selected in this step is permanently stored in the non-volatile memory.

Furthermore, the action of the scramble/encrypt block 74 and the "descramble-decrypt" block 110 enables improving the security of data transmission and reception, respectively.

With regard to the ways of using the chest-worn device 20, some clarifications are provided below.

The chest-worn device 20 is switched-on by keeping the PWR button 21 pressed for a period of more than 500ms. Instead, switching-off is accomplished by keeping the PWR button 21 pressed for a period of more than 2s.

When the chest-worn device 20 is ready to transmit or receive communications, this is indicated by the flashing (emission of a brief light pulse) of the status LED 17, every two seconds.

In particular, the status LED (coloured blue according to one aspect of the present invention) remains on during mode selection, while it flashes (for example, every 2s) when the chest-worn device 20 is operational. Furthermore, the battery's charging LED (coloured red according to one aspect of the present invention) lights to indicate battery charging when the device is connected to the USB charger, and goes out at the end of the charging process (i.e. when the battery is fully charged) or when the micro-USB connector is disconnected.

In one embodiment, the chest-worn device 20 has the following technical specifications:
- Operating band: 2.4GHz ISM band
- Number of non-interfering modes (teams): up to 16
- Modulation: Gaussian-FSK
- Transmitter output power: +20dBm (100mW)
- Receiver sensitivity: -94dBm
- Wireless data transmission speed: 64Kbps
- Audio encoding: G.711 (µ-law)
- Audio sampling frequency: 8Khz
- Audio band: 4Khz
- Data packet size: 2ms
- Mean current absorption (in transmission): 150mA
- Mean current absorption (in reception): 50mA
- "Scrambled Safe" Communication
- Earphone impedance: > 74Ω
- Microphone input method: dynamic
- PTT timeout: 30s
- Battery autonomy: on-duty shifts of 6-8 hours (duty cycle with 5% transmission, 5% reception and 90% standby - (5-5-90)).

Instead, with regard to the ways of using the wearable communication system 10 (shown in Figure 1), some further clarifications are provided below.

Assembly of the wearable communication system 10 takes place by connecting the connector of the headset 30 to the chest-worn device 20, taking care to fully insert the connector. This is followed by connecting the connector of the chest-worn device 20 to the radio 50 (connection can be made even with the radio 50 already on).

To talk on network 1, the operator presses the PTT1 button 7 of the chest-worn device 20. The radio 50 confirms pressing of the PTT1 button 7 by means on an acoustic confirmation (hereinafter, a "beep") in the headset 30. To talk on network 2, the operator presses the PTT2 button 5 of the chest-worn device 20. The radio 50 confirms pressing of the PTT2 button 5 with a "beep" in the headset 30. To talk on the internal network, the operator presses the PTT-ITI button 15 of the chest-worn device 20. The radio 50 confirms pressing of the PTT-ITI button 15 with a "beep" in the headset 30.

The volume potentiometer 3 of the chest-worn device 20 is used to adjust the listening volume in the earphones of the headset 30.

The wireless transmitter 40 is connected to the chest-worn device 20, via a wireless link, by the operator pressing the pairing button 19 for approximately 2s.

If the battery of the chest-worn device 20 is inserted, to preserve its autonomy, it is advised to switch off the wireless transmitter 40 of the chest-worn device 20.

The advantages of the present invention are evident from what has been previously described and illustrated.

In particular, the communication security is ensured by the action of the scramble/encrypt block 74 and the descramble-decrypt block 110, contributing to an improvement in the conditions and safety of the members of a team in the operating environment.

The introduction of the PTT-ITI button 15 on the chest-worn device 20 enables members of a team to securely and confidentially communicate with each other, while the option remains of selecting other radio channels via the PTT1 button 7 and PTT2 button 5.

It is also possible to create a prioritisation of communication requests within the team, thereby allowing team members immediate identification of a communication request coming from a chosen member (such as the team leader). This contributes to improving the team's safety and efficiency.

Finally, it clear that that modifications and variants can be made with regard to that set forth herein, without departing from the scope of the present invention, as defined in the appended claims.

For example, although the description and the figures always refer to the presence of two buttons PTT1 7 and PTT2 5 that enable selecting the respective radio channels (network 1 and network 2, respectively), the chest-worn device 20 may even comprise just one of the buttons PTT1 7 and PTT2 5; in this case, the associated communication will take place on a single network (network 1 or, alternatively, network 2).

## Claims

1. An interface unit (20) wearable by an operator, configured to create a communication interface with a radio (50), comprising:
- a radio-connection module, configured to generate a control signal adapted to control said radio (50) for setting up a communication in a first radio band; and
- an interphone module (60), configured to set up an interphone radio communication of a half-duplex type in a second radio band not interfering with the first radio band, and comprising first (72, 74) and second (110, 112) protection means of said interphone communication, configured to encrypt/decrypt said interphone communication through a protection key,
wherein the interphone module (60) is configured to operate in a plurality of states, including:
- an idle state (S1), wherein the interphone module (60) is not used for said interphone communication;
- a transmission state (S2), wherein the interphone module (60) acquires audio samples coming from a microphone operatively coupled, in use, to said interface unit (20), and transmits said audio samples in form of digital packets; and
- a receiving state (S3), wherein the interphone module (60) receives a series of audio samples in form of digital packets, wherein, during the transmission state in the second operating mode, said interface unit is configured to:
- receive an audio signal from the microphone;
- digitize and compress said audio signal received from the microphone at time intervals each having a first value, generating a respective audio sample for each time interval;
- generate one or more digital packets starting from said digitalized and compressed audio samples, each of these digital packets terminating with a datum identifying a radio channel to be used during said transmission state (S2); and
- transmit, during time intervals each having a second value, a respective digital packet,
wherein the ratio between the second value and the first value is equal to the number of audio samples that form each digital packet.

2. The interface unit according to claim 1, further comprising:
- a first control button (7; 5), activable for controlling transmission of said control signal; and
- a second control button (15), activable for controlling the interphone module (60) in the transmission state (S2).

3. The interface unit according to claim 2, wherein:
the interface unit is configured to pass from the idle state (S1) to the transmission state (S2) following upon pressing of the second control button, and returning into the idle state when said second control button is released; and
the interface unit is configured to pass from the idle state (S1) to the receiving state (S3) upon riceiving of a digital packet among said digital packets, and returns into the idle state (S1) when no digital packet among said digital packets is received within a period of time calculated starting from the last digital packet received.

4. The interface unit according to any one of the preceding claims, further comprising a microprocessor operatively coupled to the interphone system (60) and to the interface unit,
wherein the interphone system (60) includes a transmission circuit (60A) and a receiving circuit (60B),
wherein the transmission circuit (60A) comprises said first protection means, which in turn include:
- a coding block (72) configured to process a digital audio sample coming from the microphone, and to carry out an operation of compression of said digital audio sample;
- a scramble/encrypt block (74) configured to mask an information content of the compressed digital audio sample using said protection key;
and wherein the receiving circuit comprises said second protection means which in turn include descramble-decrypt/decoding blocks (110, 112) configured to decrypt said information content, using said protection key.

5. A wearable communication system (10), wearable by an operator and comprising:
- an interface unit (20) according to any one of the claims 1 to 4;
- a radio (50) configured to be connected to, and controlled by, the interface unit (20); and
- a headset (30), provided with a microphone, connected to the interface unit (20) via an audio connector to receive and reproduce an audio signal associated with said decrypted interphone communication, and to acquire the speech of said operator and transmit it to the interface unit (20).

6. A communication network, comprising a plurality of wearable communication systems (10) according to claim 5, each wearable communication system (10) being wearable by a respective operator, wherein:
each respective operator possesses the same protection key and forms, together with the other operators, a first operating team;
said radio-connection module is configured to enable the operators of the first operating team to communicate with operators and/or services external to the first operating team; and
said interphone system (20) is configured to enable the operators of the first operating team to communicate with each other with an encrypted interphone communication.

7. The communication network according to claim 6, wherein the interface unit (20) is configured to operate on a plurality of radio communication channels not interfering with one another and that have a bandwidth separation of 8 MHz, enabling simultaneous communication of a plurality of operating teams in the same area, each operating team using a respective radio channel different from the radio channel used by the other operating teams of said plurality of operating teams.
